# EUROPEAN PATENT SPECIFICATION

(11) **EP 2 946 371 B1**
(45) Date of publication and mention of the grant of the patent: **23.05.2018**
(21) Application number: 14706089.1
(22) Date of filing: 16.01.2014
(51) Int. Cl.: G06Q 10/00, G06K 7/10, H04W 4/00, H04W 4/02, G07C 11/00

(54) **A CONTROL SYSTEM FOR DETECTING THE PRESENCE OF EQUIPMENT DEVICES**
STEUERUNGSSYSTEM ZUR ERKENNUNG DES VORHANDENSEINS VON AUSRÜSTUNGSVORRICHTUNGEN
SYSTÈME DE COMMANDE POUR DÉTECTER LA PRÉSENCE DE DISPOSITIFS D'ÉQUIPEMENT

(30) Priority: 16.01.2013 IT GE20130005
(43) Date of publication of application: 25.11.2015
(73) Proprietor: Iotron S.r.l., 00060 Formello (RM) (IT); Enel Distribuzione Spa Divisione Infrastrutture e Reti, 00198 Roma (IT)
(72) Inventor: MICELOTTA, Andrea, I-43123 Parma (IT); COSSU, Valentina, I-09047 Selargius (CA) (IT)
(74) Representative: Karaghiosoff, Giorgio Alessandro
(86) International application number: PCT/IB2014/058316
(87) International publication number: WO 2014/111872

(56) References cited:
- US-A1- 2010 159 953
- US-A1- 2011 221 575
- US-A1- 2011 260 839
- US-A1- 2011 300 905

## Description

The present invention relates to a control system for detecting the presence of equipment devices comprising at least one transmit/receive unit associated with each equipment device, said at least one transmit/receive unit, so-called identification tag, communicating with a mobile user device. US2011/0260839A discloses a system for reading RFID tags via a smart phone. Furthermore, the identification tag comprises a unique identification code of the associated equipment device.

Generally, completion of a work activity requires the use of a predetermined list of equipment devices, for proper work performance.

This aspect is particularly important for the safety of workers, i.e. in any condition in which special personal protective equipment must be worn to facilitate the performance of tasks while ensuring safety for the operator.

For example, for the safety of workers during electric network maintenance, workers must use personal protective equipment as required for the type of work to be undertaken.

Completeness check on the required personal protection equipment is currently carried out by the operators themselves or a supervisor, but is still a non-automatic check which may not be carried out regularly, and cannot guarantee safety of operators.

In addition to the above, it would be desirable to monitor and record the environmental conditions to which individuals are exposed, to facilitate maintenance and prompt replacement of equipment devices, and to check proper use thereof, with improper use warnings being possibly issued to operators.

Therefore, there is a yet unfulfilled need in the art for a control system for detecting the presence of equipment devices that can obviate the above drawbacks.

The present invention fulfils the above purposes by providing a control system for detecting the presence of equipment devices as described above, wherein the mobile user device comprises at least one input/output interface, at least one display unit and one or more storage units in communication with processor means for executing a logic program, whose execution provides detection of each equipment device through interrogation of the identification tag associated therewith. Aspects of the invention are disclosed in independent claim 1. Particularly, the presence of each equipment device is detected by the mobile user device, which reads the identification code of the equipment devices, from the identification tags associated with each equipment device.

The mobile user device uniquely identifies each equipment device due to the provision of a list of associations between each equipment device and the corresponding unique identification code, stored in the storage units.

Preferably, the mobile user device is a mobile phone of smartphone type, as is known in the art, a logic program application being executed on such smartphone.

The smartphone device preferably communicates with each identification tag using Bluetooth protocols and the ANT technology.

It shall be noted that the Bluetooth protocol in use herein is the particular Bluetooth 4.0 release.

Both Bluetooth 4.0 Low Energy and ANT are becoming increasingly popular, but are not widespread in mobile devices yet.

As far as application is concerned, the ANT standard provides better guarantees in terms of battery life and especially has a series of programming interfaces for association with various devices.

These technologies are known in the art and extensively described in the following Web pages:
http://it.wikipedia.org/wiki/Bluetooth
http://en.wikipedia.org/wiki/ANT (network)
whose content shall be intended to be incorporated herein.

The use of such technologies is not an obvious replacement of the technologies that are known to be used in prior art systems, which typically use RFID transponders.

First, the use of RFID transponders requires a given frequency for signal transmission and especially requires the use of special devices, whereas bluetooth and ANT technologies are commonly used in mobile phones.

The operation of the system of the present invention through the logic program shall be further described below, but the advantages provided by such system are already self-evident.

First, the system avoids the need for any human action by an external operator to check for the presence of the required equipment devices, as each equipment device is associated with a transceiver unit, which not only identifies the equipment device, but may be also interrogated by the logic program for the mobile user device to determine whether this equipment device is present.

As more clearly shown below, the communication technologies used herein can detect both the presence of each equipment device and its precise location.

This feature is particularly advantageous for safety purposes.

The safety of each worker requires the use of personal protective equipment as requested for the particular type of work to be undertaken.

Therefore, the system of the present invention allows proper use of personal protective equipment to be automatically checked, and improper use warnings to be issued to operators, when needed.

In a possible embodiment, the logic program is executed throughout the period of use of the equipment devices and the presence of the equipment devices is detected in real-time mode.

The advantages of this aspect are self-evident, because continuous and real-time monitoring for correctness and completeness of the equipment outfit of each worker for carrying out a given task, provides feedback not only about safety of such worker, but also about proper performance of such task.

In order to improve such aspect and assist the worker, at least one database is stored in said one or more storage units, and contains information about the activities to be carried out and the required equipment devices, such that each activity to be carried out is associated with a predetermined type and a predetermined number of equipment devices to be used.

The database may be changed as needed and according to prior art computer technology knowledge, to provide prompt display of the list of equipment devices that are required to be used for carrying out particular tasks.

The detected data may be directly displayed on the mobile user device through the display interface, for notification to the worker, but such data may be also notified to an external operator.

In a possible embodiment, a remote external unit is provided, which is designed to communicate with the mobile user device and/or the at least one identification tag.

This remote unit may receive information from any part of the system of the present invention and mat be also equipped with a display unit and an input/output unit, allowing it to be interfaced with a remote user.

The presence of this remote unit allows an external operator to monitor proper task performance of operators and warn them of any non-complying or missing equipment device among those required.

Furthermore, the remote unit allows various different implementations of the system of the present invention, which have advantageous aspects.

For example, the external operator may be allowed to view in real time all the operators simultaneously at work at a given time, to check their equipment and use the detected data for efficient organization of the various equipment devices to be held in stock.

This feature also provides an economic advantages because inventory optimization allows more efficient cost control.

Efficient stock and inventory management is allowed because the external operator may use the data he/she has retrieved to make estimates about the equipment devices that are actually needed to carry out certain tasks.

This feature obviously has a critical aspect when not dealing with compulsory and/or regulatory equipment devices, and when workers have to be checked to determine whether they have the equipment devices required for undertaking their work.

In a preferred variant embodiment, the execution **of** the logic program causes the control unit to carry out the steps of:
a) selecting an activity to be carried out,
b) identifying the equipment device required therefor,
c) detecting the presence of equipment devices through interrogation of the identification tags associated with each equipment device.

These steps will be further described and illustrated by certain exemplary embodiments hereof, which provide the advantages as described above, particularly the fact that each worker may be aware of any missing equipment device, and of the equipment devices needed or required for worker safety.

The above described steps may be changed at will by the worker or an external operator, or improvement steps may be added to improve the use and features of the system.

For instance, for the worker to be warned about an improper condition of its equipment, a further step may be provided, in which an alarm signal is generated by the mobile user device if the equipment devices as detected in the previous step c) do not match the type and/or number identified in step b).

The signal may consist of any type of warning, i.e. a visual signal to be displayed on the display interface of the mobile user device: this visual signal may not only indicate an alarm signal, but also identify and show on the display interface the required equipment device that has not been detected by the system.

Alternatively or in addition, an acoustic signal may be provided for prompt worker warning.

If a remote unit is provided, the signals may be transmitted both to the worker and to the remote unit, or to the worker or the remote unit only.

In a possible embodiment, the step of selecting the activity to be carried out may be performed manually by the operator, using the input/output interface of the mobile user device.

Alternatively, this step may be performed automatically.

In this case, an external operator may use the remote unit to set the activity to be carried out by a given worker, or the mobile user device may be equipped with means for recognizing the activity to be carried out.

Particularly when the mobile user device is a smartphone, an identification code, such as a barcode or a QR code, may be provided in the work environment for designating the activity to be carried out, for this code to be read by the smartphone that automatically displays the list of the required equipment devices for the worker.

Advantageously, the identification tags associated with each equipment device consist of a Bluetooth unit and/or an ANT unit, such that, in addition to detecting the presence/absence of each equipment device, they also can check whether the equipment device has been placed in the proper location.

A possible embodiment of such detection may consist in reading the distance of the equipment device from the mobile user device.

This feature is not particularly relevant if the equipment device is a protective device to be worn, but is particularly convenient if, according to the tasks to be carried out, a given safety distance has to be maintained from the detected equipment device.

As shown hereinafter, for optimization of the system of the present invention, the activities carried out by a user, i.e. the working time and the completed tasks, may have to be recorded, whereby a step may be provided for setting the start of the activity.

This step may be provided at any time, e.g. next to the step of setting the activity to be carried out, or next to the step of detecting the presence of the equipment devices.

These and other features and advantages of the present invention will appear more clearly from the following description of a few embodiments, illustrated in the annexed drawings, in which:

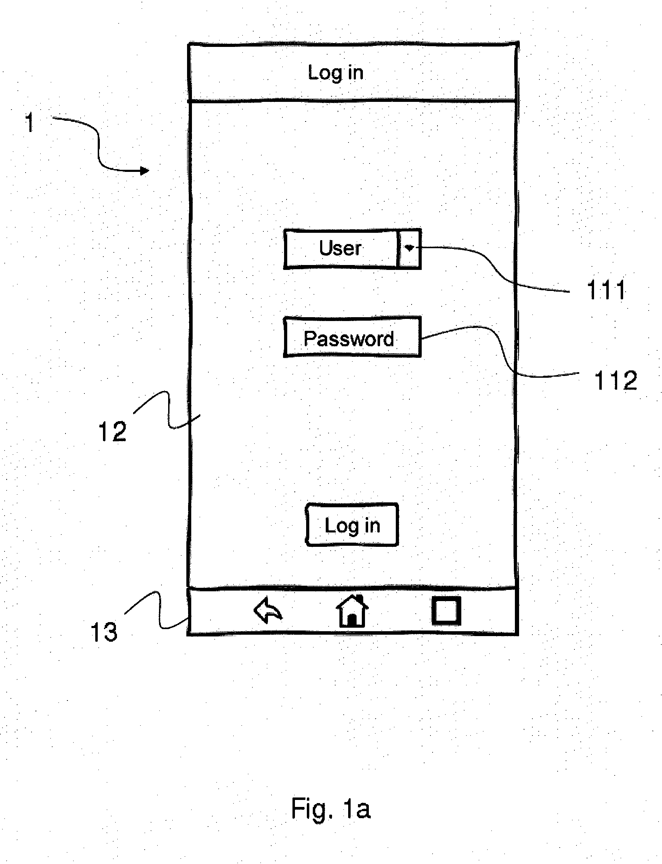

Figs. 1a to 1h show the steps of execution of the logic program in the system of the present invention, according to a possible embodiment.

It shall be noted that the figures show a preferred variant embodiment of the control system for detecting the presence of equipment devices according to the present invention.

Therefore, these figures are to be intended by way of illustration and explanation only, but without limitation of the inventive principle of the present patent application, i.e. the principle of providing a control system for detecting the presence of equipment devices, that allows simple continuous and real-time monitoring of the equipment of one or more workers.

It shall be further noted that the successive figures show a particular case of the system of the present invention, in which the equipment devices as detected by the mobile user device are mainly personal protective devices, i.e. the devices that an operator must wear for his/her safety to be ensured as he/she carries out an activity.

Particularly in the successive figures, the mobile user device is a smartphone, although any prior art device may be obviously used, as long as it has an input/output interface, at least one display unit and one or more storage units in communication with processor means for executing a logic program.

This device shall be further able to communicate with the identification tags associated with each equipment device.

These features are obviously incorporated in any prior art smartphone, as smartphones are able to communicate with the identification tags through the antenna and the Bluetooth/ANT modules and have processing and storage units for executing logic programs and display and input/output interfaces.

Furthermore, in last-generation smartphones, which use touchscreens, the input/output interface is incorporated in the display interface.

This is the case of the successive figures, that show the various screens of the smartphone, displayed one after the other according to the steps of execution of said logic program in the system of the present invention.

The control system for detecting the presence of equipment devices of the present invention further comprises at least one identification tag associated with each equipment device, which is not shown in the figures.

The identification tags may be of any type, but generally consist of Bluetooth modules and ANT-based transponders, such that the identification tags communicate with a mobile user device 1.

Irrespective of the embodiment, the individual identification tags comprise a unique identification code, identifying the equipment device with which they are associated.

The mobile user device 1 comprises an input/output interface, a display unit 11, at least one transmit/receive unit which is adapted to communicate with the identification tags and one or more storage units in communication with processor means for executing a logic program.

As mentioned above, since the mobile user device 1 is a smartphone having a touchscreen, the input/output interface covers the entire area of the display interface 11.

The mobile user device 1 communicates with the identification tags that are present and associated with the equipment devices and detects their presence, particularly the execution of the logic program is responsible for detection of the presence of each equipment device through interrogation of the identification tag.

Particularly, the presence of each equipment device is detected by the mobile user device, which reads the identification code of the equipment devices, from the identification tags associated with each equipment device.

The mobile user device uniquely identifies each equipment device due to the provision of a list of associations between each equipment device and the corresponding unique identification code, stored in the storage units.

Preferably, the logic program is executed throughout the period of use of the equipment devices, the presence of the equipment devices being detected in real-time mode.

Furthermore, in a possible embodiment, a remote external unit, not shown may be provided, which is designed to communicate with the mobile user device 1 and/or the identification tags.
Figures 1a to 1h show the various screens obtained from the execution of the logic program.
Figure la shows the user login screen, requiring a username 111 and a password 112.

Any number of users may be stored in the storage units of the smartphone 1, and the logic program is designed to be configured for each operator or for multiple operators, using an appropriate PC application, and may be reconfigured each time that its content is required to be changed for updates.

Furthermore, the mobile user device 1 may be configured for storage of a list of operators and for management of the equipment devices individually associated with each of them.

As shown in Figure la, in addition to the logic program log-in window, the smartphone 1 may have all common known smartphone controls, in a special area 13 of the screen.

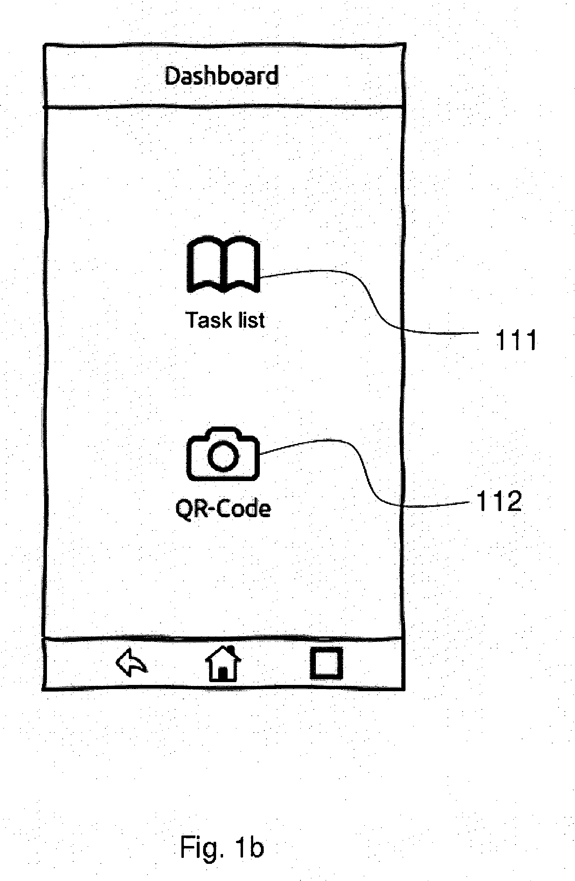

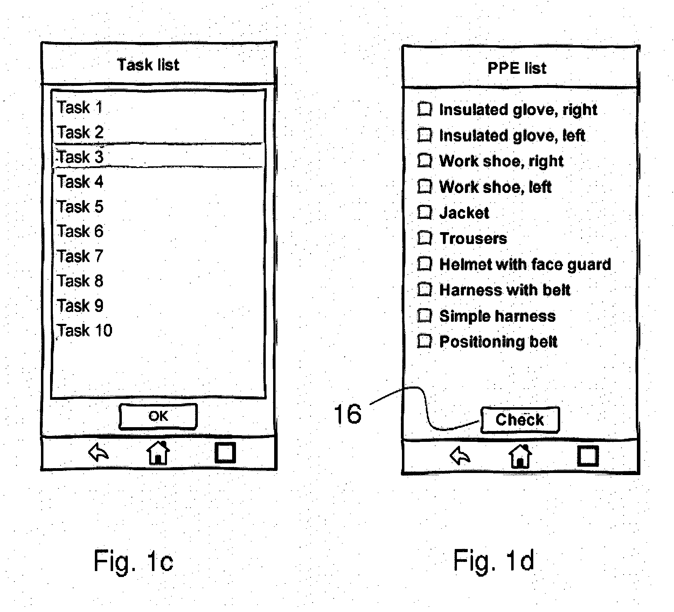

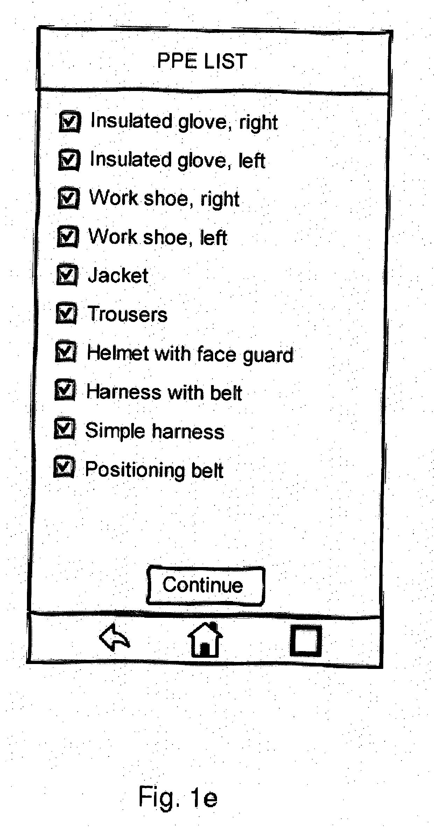

The execution of the logic program causes the control unit to carry out the steps of:
a) selecting an activity to be carried out, see Figures 1b, 1c
b) identifying the equipment devices required therefor, see Figure 1d
c) detecting the presence of equipment devices through interrogation of the identification tags associated with each equipment device, see Figure 1e.

Thus, after log-in, the operator may select the activity to be carried out in various manners.

Particularly, Figure 1b shows that this activity may be selected in two different manners, i.e. the operator may display a list of activities through the "task list" icon 14, and then select it therefrom, or the activity may be automatically retrieved, through the "QR-Code" icon 15 by a QR code reader, if a QR code is associated with the activity to be carried out.

Further activity selection modes may be provided, e.g. if an external remote unit is provided, the smartphone 1 may be synchronized, preferably by wireless communication, with the remote unit, such that the latter will notify the activity to be carried out, according to a preset work schedule.

Alternatively, the identification tags associated with the equipment devices may be arranged to contain therein information about activities that may be carried out using the equipment devices.

Such information may be sent to the smartphone 1 or to the remote unit that in turn communicates with the smartphone 1.

If the activity is manually selected through the "task list" icon 14, then Figure 1c shows the list of tasks that an operator may select.

A database is stored in said storage units of the smartphone 1, and contains information about the activities to be carried out and the required equipment devices, such that each activity to be carried out has a predetermined type and a predetermined number of equipment devices to be used.

Figure 1d shows the list of equipment devices required to carry out the task 3 of Figure 1c.

Now, the operator selects the "check" icon 16 to cause the smartphone 1 to start communication by interrogating all the identification tags within a given distance range and to detect the equipment devices therein, and identifying them from the identified identification tags.

The smartphone 1 performs detection using common prior art technologies for Bluetooth and ANT communication.

Figure 1e shows the screen of Figure 1e after detection by the smartphone 1 and displays the number of equipment devices, with the detected equipment devices having a tick next to them.

The check might result in not all the required equipment devices being detected, whereby an additional step of execution of the logic program may be provided, for generating an acoustic and/or visual alarm signal by the mobile user device 1.

An equipment device may not be detected either because it is missing, or because it is located outside a given preset range.

The communication between the mobile user device 1 and the identification tags allows detection of both the presence and the proper location of one or more equipment devices.

It shall be further noted that, concerning the generation of alarm signals, once the start of the activity has been recorded, detection by the logic program is stopped in case of events such as:
alarm for undetected equipment device,
alarm for equipment device not moving, which might indicate an accident,
secondary alarms, e.g. short residual life of the equipment device,
alarm for failure to use one or more equipment devices,
"deadman" alarm generated by the system when the accelerometer in the mobile user device detect **a** sudden fall,
alarm for general call for help, transmitted by **the** operator through the mobile user device.

If the list of the detected equipment devices is consistent with the list of the devices required to carry out the selected activity, then the activity may be actually carried out.

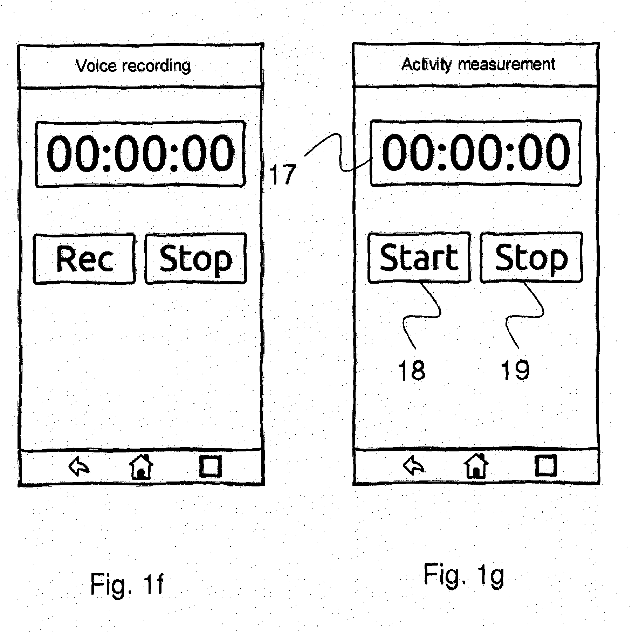

Then a start-of-activity step is provided, which is preferably combined with a voice recording step, see Figure 1f, which marks the start of the activity to be carried out and allows operator voice recording as the activity is being carried out.

Figure 1g shows the start-of-activity screen proper, with a timer 17 indicating the duration of the activity, which is controlled by the "start" 18 and "stop" 19 icons.

Detection of the presence of the equipment devices is continuously performed as the activity is being carried out and is stopped, in normal conditions, by the operator at the end of the activity.

With such continuous detection, as the activity is being carried out, a check is continuously made to ensure that all the required equipment devices are present and properly operating and, if an equipment device is missing, the timer will be automatically stopped and an alarm signal will be generated.

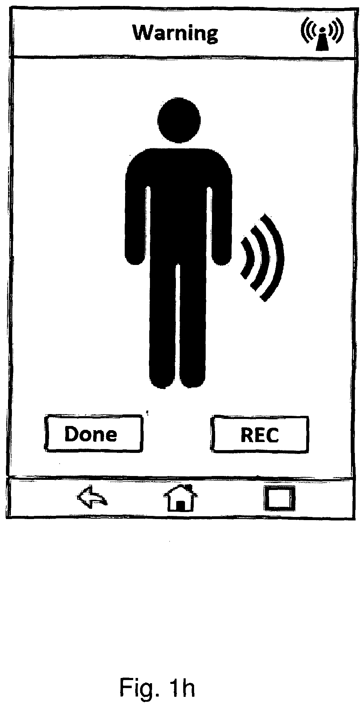

Figure 1h shows a possible screen displayed after such alarm signal: in this case, an equipment device that was level with the left hand of the operator is found to be missing.

The activity is stopped, the worker is warned by the visual/acoustic alarm signal and, if possible, solves the missing device problem, whereupon a new detection is carried out and, if all the equipment devices are properly detected, the activity resumes.

The presence of the timer and the start-of-activity step allows the system of the present invention to record activity pauses, and to stop equipment device detection and alarm recording in the suspension step.

Furthermore, if an external remote unit is provided, the logic program may operate in offline mode and locally record all data as alarms, start- and end-of-activity, voice messages, to send them to the remote unit, at a later time or in real time.

It shall be noted that the external remote unit preferably consists of a computer device or the like, with a web application thereon for real-time display of ongoing activities, alarms and information from the equipment devices of the operators that work in the field.

Finally, according to a possible embodiment, the information may be displayed synoptically on maps, but this improvement requires implementation of certain features on the mobile user device 1, such as the transmission of geographic coordinates at the start of the activity, using a GPS feature of the device, as well as the transmission of alarm signals and activity information to the external remote unit through wireless connections.

## Claims

1. A control system for detecting the presence of equipment devices comprising at least one transmit/receive unit associated with each equipment device, said at least one transmit/receive unit, so-called identification tag, communicating with a mobile user device (1), said identification tag comprising a unique identification code of the associated equipment device,
said mobile user device (1) comprises at least one input/output interface, at least one display unit (12), at least one transmit/receive unit which is adapted to communicate with said identification tag, and one or more storage units in communication with processor means for executing a logic program, whose execution provides detection of the presence of each equipment device through interrogation of said transmit/receive unit associated therewith, **characterized in that** at least one list of associations between each equipment device and the corresponding unique identification code is stored in said storage units; and wherein at least one database is stored in said one or more storage units, and contains information about the activities to be carried out and the required equipment devices, such that each activity to be carried out is associated with a predetermined type and a predetermined number of equipment devices to be used.

2. A control system as claimed in claim 1, wherein said mobile user device (1) consist of a smartphone device (1) or the like, said identification tag consisting of a Bluetooth® and/or ANT+™ transponder device.

3. A control system as claimed in one or more of the preceding claims, wherein said logic program is executed throughout the period of use of said equipment devices,
the presence of said equipment devices being detected in real-time mode.

4. A control system as claimed in one or more of the preceding claims, wherein a remote external unit is provided, which is designed to communicate with said mobile user device (1) and/or said at least one identification tag.

5. A control system as claimed in one or more of the preceding claims, wherein the execution of said logic program causes said control system to operate through the steps of:
a) selecting an activity to be carried out,
b) identifying the equipment devices required therefor,
c) detecting the presence of equipment devices through interrogation of the identification tag associated with each equipment device.

6. A control system as claimed in one or more of the preceding claims, wherein a further step d) is provided, in which an acoustic and/or visual alarm is generated by said mobile user device (1) if the equipment devices detected in step c) do not match the type and/or number identified in step b).

7. A control system as claimed in claim 5, wherein the step a) is carried out manually by a user through said input/output interface of said mobile user device (1).

8. A control system as claimed in claim 5, wherein the step a) is carried out automatically.

9. A control system as claimed in one or more of the preceding claims, wherein the presence and position of each equipment device are detected in step c).

10. A control system as claimed in one or more of the preceding claims, wherein a step a1) is provided for setting the start of the activity.

## Patentansprüche

1. Steuerungssystem zum Erfassen des Vorhandenseins von Ausstattungsvorrichtungen mit mindestens einer jeder Ausstattungsvorrichtung zugeordneten Sende-/Empfangseinheit, wobei die zumindest eine Sende-/Empfangseinheit, das so genannte Identifikations-Tag, mit einem mobilen Benutzergerät (1) kommuniziert und das Identifikations-Tag einen eindeutigen Identifikationscode der zugeordneten Ausstattungsvorrichtung aufweist,
das mobile Benutzergerät (1) zumindest eine Ein-/Ausgabeschnittstelle, mindestens eine Anzeigeeinheit (12), mindestens eine Sende-/Empfangseinheit, die dazu eingerichtet ist, mit dem Identifikations-Tag zu kommunizieren und eine oder mehrere Speichereinheiten in Kommunikation mit Prozessormitteln zur Ausführung eines logischen Programms aufweist, deren Ausführung eine Erfassung des Vorhandenseins jeder Ausstattungsvorrichtung durch Abfrage der ihr zugeordneten Sende-/Empfangseinheit ermöglicht,
**dadurch gekennzeichnet, dass**
in diesen Speichereinheiten mindestens eine Zuordnungsliste zwischen jeder Ausstattungsvorrichtung und dem entsprechenden eindeutigen Identifikationscode gespeichert ist;
und
wobei in der einen oder den mehreren Speichereinheiten mindestens eine Datenbank gespeichert ist, die Informationen über die durchzuführenden Aktivitäten und die erforderlichen Ausstattungsvorrichtungen derart enthält, dass jede durchzuführende Tätigkeit einer vorbestimmten Art und einer vorbestimmten Anzahl von zu verwendenden Ausstattungsvorrichtungen zugeordnet ist.

2. Steuerungssystem nach Anspruch 1, wobei das mobile Benutzergerät (1) aus einem Smartphone-Gerät (1) oder dergleichen besteht, wobei das Identifikations-Tag aus einer Bluetooth ®- und/oder ANT+™ -Transpondereinrichtung besteht.

3. Steuerungssystem nach einem oder mehr der vorhergehenden Ansprüche, wobei das logische Programm während der gesamten Nutzungsdauer der Ausstattungsvorrichtungen ausgeführt wird, wobei das Vorhandensein dieser Ausstattungsvorrichtungen im Echtzeitmodus detektiert wird.

4. Steuerungssystem nach einem oder mehr der vorhergehenden Ansprüche, wobei eine entfernte externe Einheit vorgesehen ist, die dazu eingerichtet ist, mit dem mobilen Benutzergerät (1) und/oder dem mindestens einen Identifikations-Tag zu kommunizieren.

5. Steuerungssystem nach einem oder mehr der vorhergehenden Ansprüche, wobei die Ausführung des logischen Programms das Steuerungssystem dazu veranlasst, folgende Schritte auszuführen:
a) Auswählen einer durchzuführenden Aktivität,
b) Identifizieren der dafür benötigten Ausstattungsvorrichtungen,
c) Erfassen des Vorhandenseins von Ausstattungsvorrichtungen durch Abfrage des jeder Ausstattungsvorrichtung zugeordneten Identifikations-Tag.

6. Steuerungssystem nach einem oder mehr der vorhergehenden Ansprüche, wobei ein weiterer Schritt d) vorgesehen ist, in dem von dem mobilen Benutzergerät (1) ein akustischer und/oder optischer Alarm generiert wird, falls die in Schritt c) erfassten Ausstattungsvorrichtungen nicht mit denen der in Schritt b) identifizierten Art und/oder Anzahl übereinstimmen.

7. Steuerungssystem nach Anspruch 5, wobei der Schritt a) manuell durch einen Benutzer durch die Ein-/Ausgabeschnittstelle des mobilen Benutzergeräts (1) ausgeführt wird.

8. Steuerungssystem nach Anspruch 5, wobei der Schritt a) automatisch ausgeführt wird.

9. Steuerungssystem nach einem oder mehr der vorhergehenden Ansprüche, wobei in Schritt c) das Vorhandensein und die Position jeder Ausstattungsvorrichtung erfasst wird.

10. Steuerungssystem nach einem oder mehr der vorhergehenden Ansprüche, wobei ein Schritt a1) zum Einstellen des Starts der Aktivität vorgesehen ist.

## Revendications

1. Système de contrôle pour détecter la présence de dispositifs d'équipement comprenant au moins une unité d'émission/réception associée à chaque dispositif d'équipement, ladite au moins une unité d'émission/réception, soi-disant tag d'identification, communiquant avec un dispositif d'utilisateur mobile (1), ledit tag d'identification comprenant un code d'identification unique du dispositif d'équipement associé, ledit dispositif d'utilisateur mobile (1) comprend au moins une interface d'entrée/sortie, au moins une unité d'affichage (12), au moins une unité d'émission/réception apte a communiquer avec ledit tag d'identification, et une ou plusieurs unités de stockage en communication avec des moyens processeurs pour exécuter un programme logique, dont l'exécution permet la détection de la présence de chaque dispositif d'équipement par interrogation de la dite unité d'émission/réception, **caractérisé en ce qu'**au moins une liste d'associations entre chaque dispositif d'équipement et le code d'identification unique correspondant est stockée dans lesdites unités de stockage ; et dans lequel au moins une base de données est stockée dans lesdites une ou plusieurs unités de stockage, et contient des informations concernant les activités à pratiquer et les dispositifs d'équipement nécessaires, de façon que chaque activité à pratiquer soit associée avec un type prédéterminé et un nombre prédéterminé de dispositifs d'équipement à employer.

2. Système de contrôle selon la revendication, dans lequel du dispositif d'utilisateur mobile (1) est constitué d'un dispositif Smartphone (1) ou similaire, le tag d'identification étant constitué d'un dispositif capteur Bluetooth® et/ou ANT+™.

3. Système de contrôle selon l'une ou plusieurs des revendications précédentes, dans lequel ledit programme logique est exécuté tout au long de la période d'utilisation desdits dispositifs d'équipement, la présence desdits dispositifs d'équipement étant détectée en temps réel.

4. Système de contrôle selon l'une ou plusieurs des revendications précédentes, comportant une unité extérieure distante, destinée à communiquer avec ledit dispositif d'utilisateur mobile (1) et/ou avec ledit au moins un tag d'identification.

5. Système de contrôle selon l'une ou plusieurs des revendications précédentes, dans lequel l'exécution du dit programme logique fait fonctionner ledit système de contrôle par les étapes consistant à :
a) sélectionner une activité à pratiquer,
b) identifiés les dispositifs d'équipements nécessaires pour celle-ci,
c) détecter la présence de dispositifs d'équipement par interrogation du tag d'identification associé à chaque dispositif d'équipement.

6. Système de contrôle selon l'une ou plusieurs des revendications précédentes, comportant une étape supplémentaire d), dans laquelle une alarme acoustique et/ou visuelle est générée par ledit dispositif d'utilisateur mobile (1) si les dispositifs d'équipement détectés dans l'étape c) ne correspondent pas au type et/ou au nombre identifiés dans l'étape b).

7. Système de contrôle selon la revendication 5, dans lequel l'étape a) est effectuée manuellement par un utilisateur à travers ladite interface d'entrée/sortie dudit dispositif d'utilisateur mobile (1).

8. Système de contrôle selon la revendication 5, dans lequel l'étape a) est effectuée de façon automatique.

9. Système de contrôle selon l'une ou plusieurs des revendications précédentes, dans lequel la présence et la position de chaque dispositif d'équipement sont détectées dans l'étape c).

10. Système de contrôle selon l'une ou plusieurs des revendications précédentes, comportant une étape a1) pour établir le début de l'activité.
